Europäisches Patentamt

European Patent Office

Office européen des brevets

(19)

(11) Publication number: **0 461 349 A1**

## (12) EUROPEAN PATENT APPLICATION

(21) Application number: **91104072.3**

(22) Date of filing: **15.03.91**

(51) Int. Cl.⁵: **F16K 31/02, E03C 1/05**

(30) Priority: **16.03.90 JP 27508/90 U**
**26.10.90 JP 112391/90 U**

(43) Date of publication of application:
**18.12.91 Bulletin 91/51**

(84) Designated Contracting States:
**CH DE ES FR GB IT LI**

(71) Applicant: **INAX CORPORATION**
**6 Koiehonmachi 3-chome**
**Tokoname-Shi Aichi-Ken 479(JP)**

(72) Inventor: **Yasuo, Takashi**
**3-6 Koiehonmachi, Tokoname-shi**
**Aichi-ken(JP)**
Inventor: **Kawamoto, Ryuichi**
**3-6 Koiehonmachi, Tokoname-shi**
**Aichi-ken(JP)**

(74) Representative: **DIEHL GLAESER HILTL &**
**PARTNER**
**Patentanwälte Flüggenstrasse 13**
**W-8000 München 19(DE)**

(54) **Human body sensing mechanism for an automatic faucet apparatus.**

(57) A human body sensor for an automatic faucet apparatus, whose principal portion is so constructed that a light emitting part (11) and a light receiving part (12) are provided in the vicinity of a water outlet (10) of an automatic faucet (1), a body (3) of a human body sensor provided with a light emitting source (3a) and a detecting part (3b) is disposed apart from the water outlet (10), and the light emitting part (11) and light receiving part (12) are connected with the light emitting source (3a) and the detecting part (3b) at the body (3) of human body sensor through optical fibers (13, 14), respectively.

FIG.1

The present invention relates to an improvement in a human body sensor provided at an automatic faucet apparatus for detecting the existence of a human body to automatically control the discharge of water.

The prior art related to the conventional automatic faucet apparatus has been well known as disclosed in the U. S. Patent No. 4,688,277, which is constructed as shown in Fig. 3 as enclosed herewith.

The automatic faucet apparatus comprises a water discharge member 21 disposed on the upper surface of a wash counter 25, a human body sensor 23 mounted to a water outlet 22 of the water discharge member 21, a water discharge control device 26 connected to the human body sensor 23 through a signal conductor 24, and an electromagnetic valve 28 provided on the way of a water supply pipe 27 for opening and closing a water passage by a command from the water discharge device 26.

The human body sensor 23 usually uses a diffusion reflection type device utilizing the infrared ray. In detail, when a user extends his hand near the water outlet 22, the infrared ray emitted from the human body sensor 23 is reflected from the hand, and the reflected light is detected to perform detection of human body. The human body sensor 23, when detecting the human body, outputs a human body detection signal to the water discharge device 26, and the water discharge device 26 receives the human body detection signal to issue a command of opening to the electromagnetic valve, thereby discharging water from the water outlet 22 at the water discharge member 21 through the water supply pipe for a predetermined time period, e.g. as long as the human body is detected.

The above-mentioned automatic faucet 20, however, is provided at the water outlet 22 with the human body sensor 23, a light source for emitting the infrared ray, a detection circuit for the received reflected light, and an output device for the human body detection signal.

Therefore, the human body sensor 23 itself is large-sized, thereby having the defect that not only its appearance is poor but also the space around the water outlet 22 is restricted. Also, when the space around the water outlet 22 is restricted, various problems are created in so far as not only a user is hindered when washing his hands, but also the possibility that he contacts the faucet and breaks it is high.

The present invention is a human body sensor designed to solve the above-mentioned conventional problem and is characterized in that a light emitting part and a light receiving part are provided in the vicinity of a water outlet of an automatic faucet, a human body sensor body provided with a light emitting source and a detection part is disposed at a place apart from the water outlet, and the light emitting part and light receiving part are connected to the light emitting part and the detecting part at the human body sensor through optical fibers, respectively.

Fig. 1 is a partially sectional side view showing an automatic faucet apparatus provided with a human body sensor of the present invention.

Fig. 2 is a partially sectional side view of a modified embodiment of the automatic faucet apparatus of the present invention, and

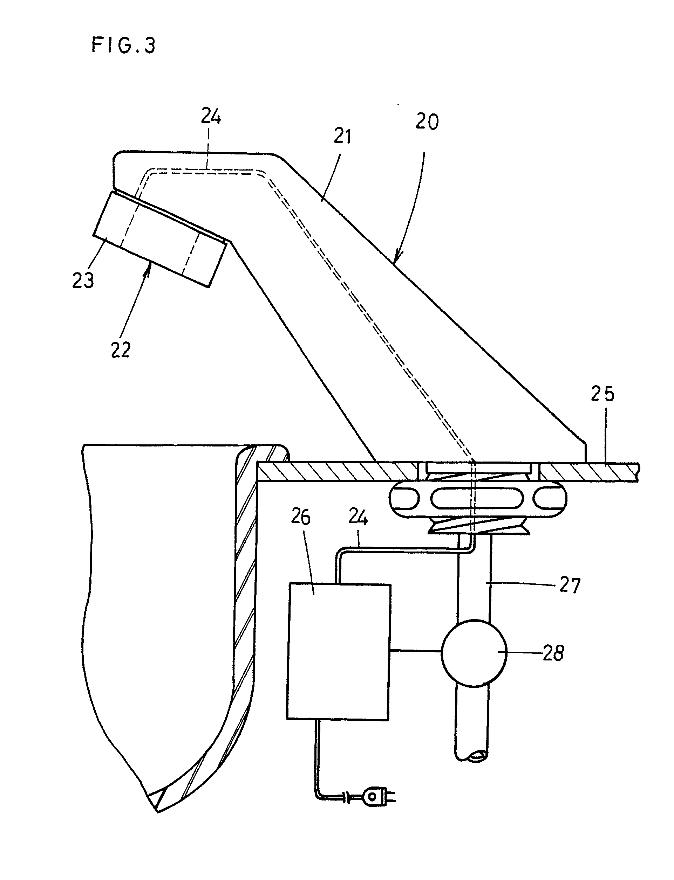

Fig. 3 is a sectional side view of a conventional automatic faucet apparatus.

Next, an embodiment of the present invention will be explained on reference to the drawings.

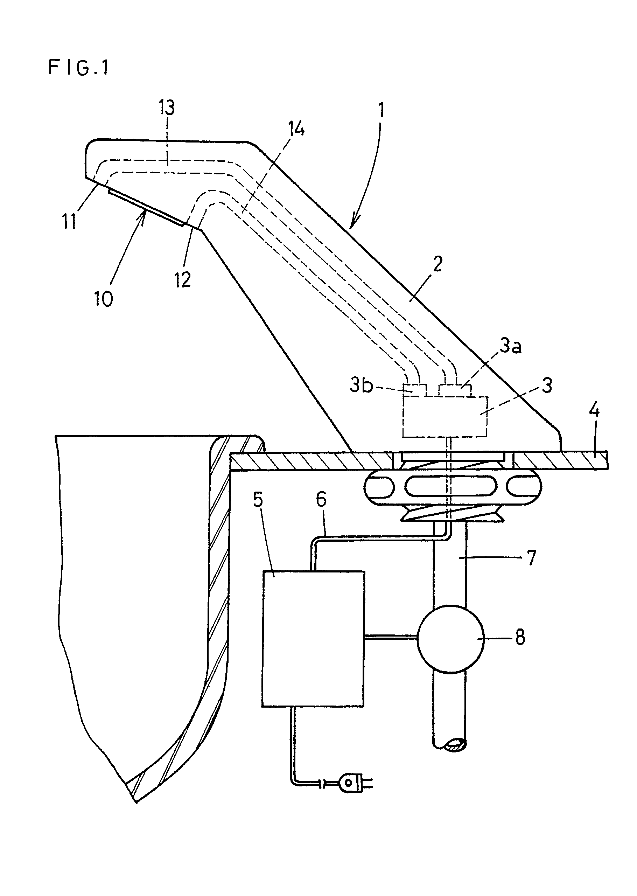

Fig. 1 shows an automatic faucet apparatus 1 of the present invention provided with a human body sensor of the present invention, which is outlined such that a water discharge member 2 provided with a water outlet 10 is disposed on the upper surface of a wash counter 4, an electromagnetic valve 8 is provided on the way of a water supply pipe 7 connected to the water discharge member 2, and the electromagnetic valve 8 is connected to a water discharge control device 5 for controlling the opening and closing of the valve 8.

The human body sensor of this embodiment is characterized in that a human body sensor body 3 is housed within the water discharge member 2, a light emitting part 11 and a light receiving part 12 are provided at the water discharge member 2 such that, seen in vertical direction, the water outlet 10 lies between the parts 11 and 12, and the light emitting part 11 is connected to a light emitting source 3a at the human body sensor 3 and the light receiving part 12 is connected to a detection part 3b at the human body sensor 3, through a light emitting optical fiber 13 and a light receiving optical fiber 14, respectively.

Such construction can detect whether or not a user extends his hands toward the water outlet 10 by the human body sensor body 3 disposed apart from the water outlet 10. The human body sensor body 3 and the water discharge control device 5 are connected to each other through a signal conductor 6 so that the control device 5 gives a command of opening to the electromagnetic valve 8 on the basis of a human body detection signal output from the human body sensor body 3 having detected the human body, whereby the water supply is started.

Although the above-mentioned embodiment uses a construction such that the human body sensor body is housed in the water discharge member 2, the present invention is not limited to such construction, but may alternatively have the sensor body 3 at the outer surface of water discharge member 2 or dispose it below the wash counter 4. In brief, the human body sensor body 3 need only be disposed apart from the water outlet 10 so that it does not hinder the use of the faucet apparatus.

The light emitting optical fiber 13 and the light receiving optical fiber 14 are used as means for connecting the human body sensor body 3 with the light emitting part 11 and the light receiving part 12, whereby it is advantageous that the installation of these means in the faucet apparatus is extremely easy.

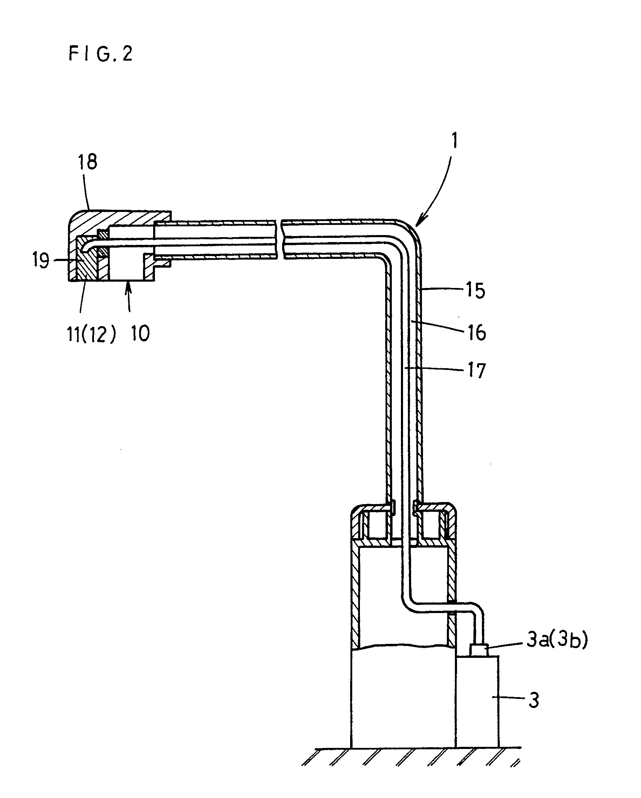

For example, as shown in Fig. 2, optical fibers 17 can be inserted into a water passage 16 of a faucet 1. This embodiment is so constructed that a water supply pipe 15 is made horizontally turnable and the optical fibers 17 inserted into the water passage 16 of the water supply pipe 15 are used to connect the light emitting part 11 and light receiving part 12, respectively, provided in the vicinity of the water outlet 10 with a respective light emitting source 3a and a light detecting part 3b of the human body sensor body 3 provided at the exterior of the faucet 1. The optical fiber 17, even when in contact with water, does not affect the transmission of a photo signal. The water passage 16 is thus utilized to dispose therein the optical fibers 17. Accordingly, this saves the providing of a particular space for the optical fibers 17. In addition, this embodiment shows at the foremost end of the water supply pipe 15 a cap 18 forming the water outlet 10 and comprising condenser lenses 19 which are mounted to the cap 18, thereby forming the light emitting part 11 and the light receiving part 12.

The present invention also covers various modifications corresponding to the above embodiments.

Operation of the Invention:

The human body sensor of the present invention transmits the infrared ray or the like emitted from the light source at the human body sensor body disposed apart from the water outlet to the light emitting part provided in the vicinity of the water outlet through the optical fibers, and projects the light from the light emitting part to the exterior. When a human body exists in the vicinity of the water outlet, the light reflected from the human body incides to the light receiving part provided in the vicinity of the water outlet and is transmitted to the detecting part at the human body sensor body through the optical fiber. Like with the conventional system, the sensor body receiving the reflected light outputs the human body detection signal to the control device for controlling the opening and closing of the water passage, so that the control device discharges water for the predetermined or desired time period on the basis of the human body detection signal.

Thus, since the human body sensor body in the present invention is disposed apart from the water outlet, the space thereon is not restricted.

Effect of the Invention:

The human body sensor of the present invention, the human body sensor body is disposed apart from the water outlet, and the light emitting part and the light receiving part provided in the vicinity of the water outlet are connected with the light source and the detecting part at the human body sensor body through the optical fibers, respectively, thereby not restricting the space around the water outlet. The user can wash his hands and fingers with ease, and moreover there is no fear that the human body sensor body comes into contact with the user, which avoids breaking of the sensor body.

Conventionally, the human body sensor mounted to the water outlet is connected with the water discharge control device by the signal conductor, thereby requiring strict waterproof conditions between the sensor and the control device. On the contrary, in the present invention, the light emitting part and the light receiving part are connected with the sensor body through the optical fibers, whereby simple waterproof conditions are sufficient, which saves work and costs.

Furthermore, it is possible to remove the human body sensor body which is conventionally mounted to the water outlet, thereby making the automatic faucet of simple configuration and superior in appearance.

Thus, the present invention provides a human body sensor demonstrating a superior practical effect.

**Claims**

1. A human body sensing mechanism characterized in that a light emitting part (11) and a light receiving part (12) are provided in the vicinity of a water outlet (10) at an automatic faucet apparatus (1), a body (3) of a human body sensor provided with a light emitting source (3a) and a detecting part (3b) positioned apart from said water outlet (10), and said light emitting part (11) and said light receiving part (12) are connected with said light emitting source (3a) and the detecting part (3b) at said body (3) of the human body sensor through optical fibers (13, 14), respectively.

2. A human body sensing mechanism according to claim 1, wherein said optical fibers (13, 14) are inserted into a water passage (16) at said automatic faucet (1).

F I G .1

FIG. 2

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 337 367 (SLOAN VALVE CO.)<br>* Claims 3,4; figure 6 * | 1,2 | F 16 K 31/02<br>E 03 C 1/05 |
| X | PATENT ABSTRACTS OF JAPAN, vol. 10, no. 336 (M-535)[2392], 14th November 1986;<br>& JP-A-61 140 680 (MATSUSHITA ELECTRIC WORKS LTD) 27-06-1987<br>* Whole abstract * | 1,2 | |
| X | CH-A-6 467 65 (AG OEDERLIN & CIE)<br>* Page 2, right-hand column, lines 12-23 * | 1 | |

TECHNICAL FIELDS
SEARCHED (Int. Cl.5)

F 16 K 31/00
E 03 C 1/00

The present search report has been drawn up for all claims

| Place of search | Date of completion of search | Examiner |
|---|---|---|
| The Hague | 27 August 91 | DE SMET F.P. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

&: member of the same patent family, corresponding document